# EUROPÄISCHE PATENTANMELDUNG

(11) **EP 2 975 711 A1**
(43) Veröffentlichungstag der Anmeldung: **20.01.2016**
(21) Anmeldenummer: 14177413.3
(22) Anmeldetag: 17.07.2014
(51) Int. Cl.: H02G 3/04, H02G 3/22, H02G 3/38

(54) **Installationskanal für Geräte, Leitungen und Kabel**

(71) Anmelder: Zurecon AG, 9053 Teufen AR (CH)
(72) Erfinder: Pfluger, Gerd, 4625 Oberbuchsiten (CH)
(74) Vertreter: Rutz & Partner

(57) **Zusammenfassung**

Der Installationskanal (1), der der Aufnahme von Leitungen und Kabeln (9) sowie elektrischen Geräten (8) dient, umfasst einen Kanalkörper (10), der wenigstens eine parallel zur Längsachse des Installationskanals (1) verlaufende Längsöffnung aufweist. Erfindungsgemäss umfasst der Kanalkörper (10) ein erstes und ein zweites Kanalsegment (1A; 1B), die je eine am Kanalkörper (10) aussen liegende und parallel zur Längsachse des Installationskanals (1) verlaufende Längsöffnung (140A; 140B) aufweisen und die je eine innerhalb des Kanalkörpers (10) angeordnete Seitenwand (11; 12; 13) aufweisen, die miteinander verbunden eine Montagewand (M) bilden, die mit Öffnungen (111, 112) versehen ist, die zur Montage der elektrischen Geräte (8) und zur Durchführung der Kabel (9) vorgesehen sind.

## Beschreibung

Die Erfindung betrifft einen Installationskanal zur Aufnahme von Kabeln und Leitungen sowie Geräten, insbesondere Anschlussvorrichtungen.

In Gewerbe-, Industrie- und Verwaltungsgebäuden werden Kabel, insbesondere Kabel für Stark- und Schwachstromnetze, Leitungen und Rohre, infolge fehlender Eigenstabilität in metallene Kabelkanäle gelegt und so beispielsweise von einem Schaltfeld oder einer Zentrale zu den Verbrauchern geführt. In Labors sind nebst elektrischen Leitungen auch Gasleitungen zu verlegen. Kabelkanäle dieser Art sind beispielsweise aus dem [1] Produktkatalog der LANZ OENSINGEN AG, Oktober 2013, bekannt.

Das Medienverteilsystem und das zugehörige Kanalsystem innerhalb eines Gebäudes weisen typischerweise eine Baumstruktur auf, die einen Bereich der Grobverteilung, einen Bereich der Feinverteilung sowie einen Anschlussbereich umfasst. Im Bereich der Feinverteilung weist das Kanalsystem zahlreiche Zweigstellen auf, welche es erlauben, Kabel und Leitungen in den Anschlussbereich zu führen, in dem zahlreiche Anschlussvorrichtungen vorgesehen sind, an die Geräte angeschlossen werden können.

Im Bereich der Feinverteilung und im Anschlussbereich werden oft Brüstungskanäle, Deckenkanäle und Sockelkanäle eingesetzt, die jeweils unterschiedlich ausgestaltet sind.

Insbesondere in Geschäftsräumen und Büros werden oft Doppelböden mit Bodenplatten eingesetzt, die oberhalb eines Betonbodens einen zweiten Boden bilden. Bei einem Doppelboden dieser Art, der beispielsweise aus der WO2012168134A2 bekannt ist, können Kabel unterhalb der Bodenplatten verlegt werden, wobei oft keine geordnete Führung der Kabel vorhanden ist.

Aus der DE202011100808U1 ist ein Kabelkanal bekannt, welcher der Aufnahme von Kabeln und Steckdosen dient und der einen rinnenförmigen Kanalkörper umfasst, der frontseitig eine in Längsrichtung durchgehende Längsöffnung aufweist, die mittels eines Deckels verschliessbar ist. In traditioneller Weise sind die Steckdosen an der Frontseite des Kabelkanals angeordnet, wodurch verschiedene Nachteile resultieren. Üblicherweise ist die Frontseite des Kanals nur für die Aufnahme bestimmter Geräte oder Steckdosen vorgesehen, weshalb der Installateur genau diese Geräte und Steckdosen verwenden muss. Bereits aus ästhetischen Gründen ist es nicht möglich, die Frontseite des Kanalkörpers mit verschiedenen Montageöffnungen zur versehen, die für verschiedene Geräte passend sind.

Frontseitig montierte elektrische Geräte sind zudem stets sichtbar, was insbesondere bei hohen ästhetischen Ansprüchen unerwünscht ist. Weiterhin sind frontseitig montierte elektrische Geräte nur mangelhaft geschützt.

Ebenso ist der Kabelkanal nur schlecht zugänglich, so dass Kabel und elektrische Einrichtungen nicht leicht montiert werden können.

Innerhalb des Kabelkanals können Kabel zudem nicht leicht verlegt werden, da die installierten elektrischen Geräte in den Leitungsquerschnitt hineinragen. Ferner ist keine geordnete Kabelführung möglich.

Oft sind Kabelkanäle auch hohen mechanischen Belastungen ausgesetzt, die eine Deformation des Querschnitts eines Kabelkanals verursachen können.

Die aus der DE202011100808U1 bekannten Kabelkanäle sind vor allem im Anschlussbereich, aber nicht im Bereich der Grobverteilung und der Feinverteilung des Kabelsystems einsetzbar. Ebenso sind diese Kabelkanäle unterhalb der Bodenplatten eines Doppelbodens nicht sinnvoll einsetzbar.

In Reinräumen z.B. bei Lebensmittelherstellern und Labors ist es zudem oft erwünscht, Leitungssysteme und somit auch Kabelkanäle dicht abzuschliessen, was bei der frontseitigen Montage von elektrischen Geräten kaum möglich ist.

Der vorliegenden Erfindung liegt daher die Aufgabe zugrunde, einen für die Installation von Kabeln und elektrischen Geräten vorgesehenen Installationskanal zu schaffen, der nicht mit den beschriebenen Mängeln behaftet ist.

Insbesondere sollen elektrische Geräte und Einrichtungen jeglicher Art vorzugsweise ohne Anpassungen mit dem Installationskanal verbunden werden können.

Kabel und elektrische Einrichtungen sollen zudem besonders einfach montiert oder installiert werden können, so dass entsprechende Installationsarbeiten zügig erledigt werden können. Insbesondere soll der Installationskanal für die Montage vorteilhaft zugänglich sein.

Der Installationskanal soll zudem in verschiedenen Bereichen eines Kanalsystems, insbesondere im Bereich der Feinverteilung und im Anschlussbereich, vorteilhaft einsetzbar sein.

Im Bereich der Feinverteilung soll sich der Installationskanal durch eine besonders hohe Zugänglichkeit sowie die Möglichkeit der geordneten Leitungsführung oder Medientrennung auszeichnen.

Im Anschlussbereich soll die Installation von Geräten und Einrichtungen vorteilhaft realisierbar sein. Die Geräte und Einrichtungen sollen dabei vorteilhaft installierbar und gut geschützt sein.

Diese Aufgabe wird mit einem Installationskanal gelöst, welcher die in Anspruch 1 angegebenen Merkmale aufweist. Vorteilhafte Ausgestaltungen der Erfindung sind in weiteren Ansprüchen angegeben.

Der Installationskanal, der der Aufnahme von Leitungen und Kabeln sowie Geräten, insbesondere elektrischen Geräten und Anschlussvorrichtungen, dient umfasst einen Kanalkörper, der wenigstens eine parallel zur Längsachse des Installationskanals verlaufende Längsöffnung aufweist.

Erfindungsgemäss umfasst der Kanalkörper ein erstes und ein zweites Kanalsegment, die je eine am Kanalkörper aussen liegende und parallel zur Längsachse des Installationskanals verlaufende Längsöffnung aufweisen und die je eine innerhalb des Kanalkörpers angeordnete Seitenwand aufweisen, die miteinander verbunden eine Montagewand bilden, die mit Öffnungen zur Montage der elektrischen Geräte und zur Durchführung der Kabel versehen ist.

Durch die Verbindung von zwei Kanalsegmenten, die vorzugsweise ein C-Profil, G-Profil, oder ein U Profil aufweisen, resultiert innerhalb des Kanalkörpers eine aus zwei miteinander verbundenen Seitenwänden bestehende stabile Montagewand, die dem Installationskanal eine hohe Stabilität verleiht und die vorteilhaft zur Installation von elektrischen oder weiteren Geräten und Kabeln oder weiteren Medienleitungen verwendbar ist.

Die Montagewand kann für die Montage beliebiger Geräte vorbereitet werden, so dass der Installationskanal ohne Einschränkungen genutzt werden kann.

Die Montagewand kann mit Montageelementen versehen werden, die daran befestigt oder darin eingearbeitet sind. Beispielsweise werden Montageschienen, vorzugsweise zwei parallel angeordnete Montageschienen, Montagehaken, Montagerillen, Montagekanten, Montagesenken, Zugsentlastungen oder Schraubengewinde in die Montagewand eingearbeitet, z.B. eingeprägt, eingeschnitten und gebogen oder ausgeschnitten. Beispielsweise werden U-förmige Schnitte in die Montagewand eingefügt, wonach L-förmige Schienen, die einander zugewandt oder voneinander abgewandt sind, aus der Montagewand ausgebogen werden können. Eine Schiene kann auch durch einzelne axial ausgerichtete Montageelemente gebildet werden. Geräte, die auf einer oder zwei Seiten mit einem Halteflansch, beispielsweise einer Halteplatte, versehen sind, können seitlich in die Montageschienen eingeschoben werden. Die Geräte und die Montageelemente können auch kammartig ineinander eingreifen und gegeneinander verschoben werden bis sich die Montageelemente und an den Geräten vorgesehene Flanschelemente überlappen.

Vorzugsweise werden auch Lochungen in der Montagewand vorgesehen, durch die Kabelbinder hindurch geführt werden, mittels denen in einem der Kanalsegmente geführtes Kabel fixiert werden kann. Zum Beispiel kann ein von einem installierten Gerät weggeführtes Kabel mittels eines Kabelbinders fixiert werden, der als Zugsentlastung dient.

Diese oder weitere Montageelemente können auch mit der Montagewand verbunden oder darin eingesetzt werden. Besonders vorteilhaft ist, dass die Montagewand bzw. die Abwicklung der Kanalsegmente entsprechend bearbeitet werden kann, bevor die Kanalsegmente gebogen werden.

Dabei können die Seitenwände, die die Montagewand bilden, gleich oder unterschiedlich bearbeitet werden. Beispielsweise kann die erste Seitenwand mit Montageschienen verbunden werden, wobei die Verbindungselemente in Öffnungen in der zweiten Wand hineinragen können.

Elektroapparate können somit in die Montageschienen eingeklinkt, eingeschoben oder mit der Montagewand verschraubt werden, wobei an der Montagewand vorgesehene Gewinde oder Gewindebohrungen axial zu den entsprechenden Montageöffnungen an den Elektroapparaten ausgerichtet sind. Die Montagewand kann dabei mit Bohrungsanordnungen oder Gewindeanordnungen versehen sein, die an unterschiedliche Apparate angepasst sind.

In den aussen liegenden Seitenwänden der Kanalsegmente können Ausnehmungen oder Ausschnitte vorgesehen sein, durch die hindurch Geräte der Montagewand zugeführt werden können. Beispielsweise werden Geräte von der Rückseite gegen eine Montageöffnung der Montagewand geführt, die von der Frontseite her bedient wird.

Die für die Montage vorgesehenen Lochungen sind innerhalb des Installationskanals angeordnet, weshalb das ästhetische Erscheinungsbild des Installationskanals auch dann nicht beeinträchtigt wird, wenn verschiedenartige Aufnahmeöffnungen oder Montageöffnungen nebeneinander aus der Montagewand ausgestanzt wurden. Die Front des Installationskanals wird dadurch nicht beeinträchtigt und kann eine durchgehende Einheit bilden, falls diese erwünscht ist. Die installierten Geräte können vollständig in den Installationskanal integriert werden oder nach aussen in eine Längsöffnung hineinragen, so dass sie vorzugsweise bündig an der Front des Kanalkörpers anliegen. Der Anschluss von Steckverbindern kann somit wahlweise innerhalb oder an der Peripherie des Installationskanals erfolgen.

Die Montagewand dient gleichzeitig aus Ordnungstrennwand, die es erlaubt, verschiedene Kabelarten oder Leistungsarten voneinander zu trennen und geordnet zu führen. Beispielsweise können elektrische Leitungen und Medienleitungen voneinander getrennt werden. Die Kabel und Leitungen können zudem, beispielsweise mittels Kabelbindern, an der Montagewand befestigt werden.

Insbesondere ist auch eine funktionale Trennung von Kabeln und Leitungen möglich, die innerhalb des Kabelsystems entweder dem Bereich der Feinverteilung oder dem Anschlussbereich zuzuordnen sind. Durch die Wandöffnungen in der Montagewand hindurch können die Kabel und Leitungen von einem Kanalsegment in das andere überführt werden. Die Anordnung einer Montagewand innerhalb des mit zwei Längsöffnungen versehenen Installationskanals führt somit zu einem offenen System, da die Montagewand nicht vollständig trennend, sondern unterstützend und ordnend wirkt. Sofern dies erwünscht ist, ist sogar ein Durchgriff von der ersten zur zweiten Längsöffnung möglich.

Die Montagewand verleiht dem Installationskanal zudem eine hohe Stabilität, so dass er höheren mechanischen Belastungen standhalten kann. Um eine Deformation der an die Montagewand anschliessenden Seitenwände zu verhindern, können Halteelemente vorteilhaft eingesetzt werden, die verhindern, dass die Seitenwände auseinander oder gegeneinander gedrückt werden. Der Installationskanal hält nach der Montage daher auch grösseren mechanischen Einwirkungen stand, ohne dass irreversible Deformationen auftreten.

Der Installationskanal kann bedarfsweise, je nach Einsatzbereich innerhalb des Kabelsystems, mit den erwünschten Abmessungen versehen werden, wobei die Kanalsegmente unterschiedliche Querschnitte und Kapazitäten aufweisen können. Dabei können Deckenkanäle im Bereich der Grobverteilung und Feinverteilung des Kanalsystems, sowie als Brüstungskanäle und als Bodenkanäle insbesondere Doppelbodenkanäle, im Bereich der Feinverteilung und im Anschlussbereich vorteilhaft realisiert werden.

Die Herstellung des erfindungsgemässen Installationskanals ist einfach und kostengünstig. Für jedes Kanalsegment wird eine Abwicklung vorgesehen, die beliebig mit Öffnungen, insbesondere Montageöffnungen und Durchlassöffnungen, in der Montagewand oder der Aussenwand des Kanalkörpers versehen werden kann. Die beiden Kanalsegmente werden in der Folge geformt und an den zwei aneinander liegenden Seiten, die die Montagewand bilden, miteinander verbunden. Durch die Anordnung von Sicken an den Seitenwänden, einschliesslich der Seitenwände, die die Montagewand bilden, können die gefertigten Kanalsegmente verfestigt werden, so dass zur Fertigung des Installationskanals bzw. des Kanalkörpers auch relativ dünnes Blech mit einer Materialdicke im Bereich von 0.5mm - 1.25mm vorteilhaft verwendet werden kann. Sofern eine höhere Festigkeit gefordert ist, werden grössere Materialdicken verwendet.

Die Verbindung der Seitenwände der beiden Kanalsegmente, die die Montagewand bilden, erfolgt vorzugsweise mittels Toxen oder durch eine andere Verbindungstechnik, wie Schweissen oder Schrauben. Betreffend die vorteilhafte Anwendung von Tox-Verbindungen siehe beispielsweise die Publikation »TOX®-Verbindungssysteme« der TOX® PRESSOTECHNIK GmbH & Co. KG, D-88250 Weingarten. Bei der Verbindung von zwei relativ dünnen Platten durch einen Tox-Vorgang resultiert eine stabile Verbindung ohne grösseren Aufwand oder schädliche Nebeneffekte. Die Verbindung der Metallplatten erfolgt ohne Beschädigung der Oberfläche, nur durch Verdrängen und Verformen des Materials der beiden Platten. Eine auf das zu bearbeitende Metallblech aufgetragene Schutzschicht wird nicht beschädigt, so dass für den Schutz des Installationskanals auf weitere Schutzmassnahmen, wie ein aufwändiges Tauchverzinken, verzichtet werden kann.

Der in einfacher Weise gefertigte Kanalkörper stellt nach der Fertigung alle wesentlichen Funktionen des Installationskanals zur Verfügung. Besonders kostengünstig kann der Installationskanal hergestellt werden, wenn identische Kanalsegmente verwendet werden, die z.B. spiegelsymmetrisch angeordnet werden. Durch individuelle Dimensionierung der Kanalsegmente können gewünschte Anpassungen vollzogen werden. Sofern beispielsweise eines der Kanalsegmente eine grössere Kapazität aufweisen soll, so wird dessen Querschnitt entsprechend vergrössert oder erweitert. Besonders vorteilhaft sind Kanalsegmente mit einem Rechteckprofil, die für die Bildung der Montagewand vorzugsweise je eine Rechteckseite gleicher Länge aufweisen, so dass durch nebeneinander oder übereinander angeordnete Kanalsegmente ein Kanalkörper gebildet werden kann, der wiederum einen Rechteckquerschnitt aufweist. Falls erwünscht, werden die Profile bedarfsweise gerundet.

Die Längsöffnungen werden entsprechend der Funktion der Kanalsegmente angeordnet. Vorzugsweise dient das erste Kanalsegment als Anschlusskanal, der frontseitig bedient werden kann, beispielsweise um Anschlusskabel in die installierten Geräte oder Stromverteiler einzuführen. Das zweite Kanalsegment bildet vorzugsweise einen Kabelkanal, der primär der Verlegung von Kabel über grössere Strecken dient. In diesen Kabelkanal sollen Kabel seitlich und/oder von oben in die Längsöffnung eingelegt werden können. In verschiedenen Fällen ist es vorteilhaft, beide Längsöffnungen auf der Oberseite des Kanalkörpers anzuordnen, so dass der z.B. unterhalb eines Doppelbodens montierte Installationskanal von oben bedient werden kann.

Insbesondere im Anschlussbereich werden die Längsöffnungen vorzugsweise durch Abdeckungen abgedeckt. Der Installationskanal kann dicht abgeschlossen werden, um die darin eingelegten Kabel und Geräte gegen äussere Einwirkungen zu schützen. Beide Längsöffnungen können dabei durch vereinzelte Abdeckungen oder durch eine gemeinsame Abdeckung abgedeckt werden. Die Abdeckungen weisen vorzugsweise Kopplungselemente auf, die mit Abschlusselementen an den Kanalsegmenten verbindbar sind. Zusätzlich können Dichtungselemente, beispielsweise Gummidichtungen mit Dichtungslippen verwendet werden, die sich entlang dem Längsöffnungen erstrecken und den Installationskanal dicht abschliessen.

Vorzugsweise ist der Kanalkörper auf einer oder mehreren Aussenseiten mit Durchlassöffnungen versehen, durch die Kabel in den Installationskanal hinein oder daraus heraus geführt werden können. In die Durchlassöffnungen werden Kantenschutzprofile oder vorzugsweise aus Kunststoff gefertigte Einsatzelemente eingesetzt, welche einen mit einem Montageflansch versehenen Montagerahmen aufweisen. Durch die Durchlassöffnungen hindurch geführte Kabel werden durch die Einsatzelemente schonend gehalten. In vorzugsweisen Ausgestaltungen sind die Montagerahmen mit einer stabilen Abdeckplatte oder mit einer elastisch dehnbaren Abdeckfolie versehen, die an einer Stelle von einem Kabel durchstossbar ist und dieses in der rohrförmig oder kragenförmig dicht abschliessend umschliesst.

Aufgrund der vorteilhaften Eigenschaften ist der erfindungsgemässe Installationskanal in einem weiten Bereich des Kabelsystems und in unterschiedlichen Räumlichkeiten, wie Labors, Geschäftsräume, Büroräume, etc., vorteilhaft einsetzbar.

Im Bereich der Feinverteilung können Installationskanäle vorteilhaft eingesetzt werden, um elektrische Kabel und Medienleitungen geordnet zum Zielort zu führen. Dabei können Installationskanäle, die vorzugsweise zwei obenliegende Längsöffnungen aufweisen, besonders vorteilhaft unterhalb eines Doppelbodens geführt werden. In einem Labor können Medien durch die Montagewand getrennt zum Zielort oder dort, vorzugsweise über Anschlussvorrichtungen, zu montierten Geräten geführt werden. Besonders vorteilhaft ist, dass Geräte und Vorrichtungen innerhalb des Kanals stabil montierbar sind und nach der Verbindung mit einem Anschlusskabel oder einer Anschlussleitung abgedeckt werden können. Im Arbeitsbereich des Laboranten können die Anschlussleitungen beispielsweise durch Kabelschlitze nach unten aus dem Installationskanal herausgeführt werden. Auch in Geschäftsräumen, in denen die elektrischen Geräte längerfristig installiert sind, werden die Anschlussleitungen vorzugsweise in den Installationskanal hinein geführt. Frontseitig an der Abdeckung montierte Geräte und Anschlussdosen können vermieden werden. Sofern der Anwender dies wünscht, kann auf der Abdeckung trotzdem eine Anschlussdose vorgesehen werden, die z.B. durch ein konventionelles Verbindungskabel mit einer an der Montagewand installierten Anschlusssteckdose verbunden wird.

Nachfolgend wird die Erfindung anhand von Zeichnungen näher erläutert. Dabei zeigt:
- Fig. 1a: einen erfindungsgemässen Installationskanal 1 mit einem Kanalkörper 10, der ein erstes und ein zweites Kanalsegment 1A; 1B umfasst, die je eine Längsöffnung 140A; 140B und je eine innerhalb des Kanalkörpers 10 angeordnete Seitenwand 12 aufweisen, die miteinander verbunden eine Montagewand M mit Montageöffnungen 111, 112 bilden, die der Montage elektrischer Geräte 8 und der Durchführung oder Befestigung von Kabeln 9 dienen;
- Fig. 1b: den mittels zwei ersten Abdeckungen 21A, 21B abgeschlossenen Installationskanal 1 von Fig. 1a in einer asymmetrischen Ausgestaltung, bei der das zweite Kanalsegment 1B eine höhere Aufnahmekapazität aufweist;
- Fig. 2: den Installationskanal 1 von Fig. 1a in einer vorzugsweisen Ausgestaltung mit einer U-Profil-förmigen zweiten Abdeckung 22, die sich über drei Seiten des Kanalkörpers 10 erstreckt und beide Längsöffnungen 140A, 140B verschliesst;
- Fig. 3a: den Installationskanal 1 von Fig. 1a in einer vorzugsweisen Ausgestaltung mit den Längsöffnungen 140A, 140B der beiden Kanalsegmenten 1A, 1B auf dieselbe Seite des Kanalkörpers 10 ausgerichtet sowie eine dritte Abdeckung 23, mittels beide Längsöffnungen 140A, 140B abschliessbar sind;
- Fig. 3b: den Installationskanal 1 von Fig. 3a mit aufgesetzter Abdeckung 23;
- Fig. 4a: den von einer Aufhängevorrichtung 5 gehaltenen Installationskanal 1 von Fig. 1a mit an der Montagewand M vorgesehenen Montageöffnungen 111, 112 und an der Aussenseite des Kanalkörpers vorgesehenen Kanalöffnungen 100, in die die in Fig. 4b, 4c und 4d gezeigten Einsatzelemente 6 einsetzbar sind;
- Fig. 4b: ein der schonenden Auflage eines Kabels 9 dienendes Einsatzelement 6 mit einem Montagerahmen 61 und einem in eine Kanalöffnung 100 einführbaren Montageflansch 62;
- Fig. 4c: das Einsatzelement 6 von Fig. 4b mit einer elastisch dehnbaren Abdeckfolie 63, die mit einem Kabel 9 durchstossen werden kann;
- Fig. 4d: das Einsatzelement 6 von Fig. 4c mit einem Kabel 9, welches die Abdeckfolie 63 durchstossen hat, die in der Folge mit einem rohrförmigen Kragen 631 am Kabel 9 anliegt und den Kabeldurchlass dicht abschliesst;
- Fig. 5a: ein erstes Halteelement 31, welches eine Distanzplatte 311 und eine Klammer 312 umfasst, sowie ein zweites Halteelement 32, welches als Klammer ausgebildet ist;
- Fig. 5b: den Installationskanal 1 von Fig. 1a mit dem ersten Halteelement 31 von Fig. 5a, das in das erste Kanalsegment 1A eingesetzt ist, und mit dem zweiten Halteelement 32 von Fig. 5a, das im zweiten Kanalsegment 1B eingesetzt ist;
- Fig. 5c: den Installationskanal 1 von Fig. 5b mit den beiden eingesetzten Halteelementen 31, 32 in räumlicher Darstellung; und
- Fig. 6: den Installationskanal 1 von Fig. 1a in einer für den Anschlussbereich beispielsweise in Geschäftsräumen vorgesehenen Ausgestaltung.

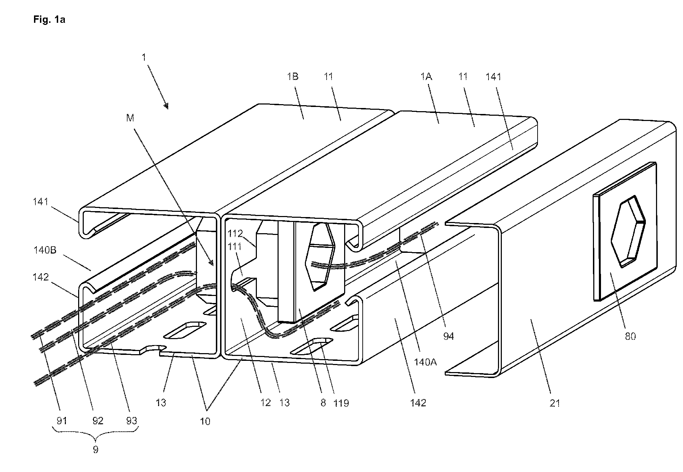

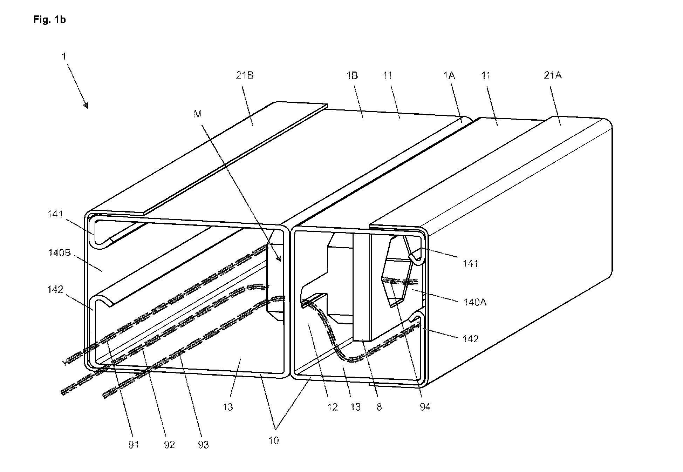

Fig. 1 zeigt einen erfindungsgemässen Installationskanal 1 mit einem Kanalkörper 10, der ein erstes und ein zweites G-Profilförmiges Kanalsegment 1A; 1B umfasst, die je eine mittlere Wandseite 12 und zwei äussere Wandseiten 11, 13 aufweisen, an denen parallel zur mittleren Wandseite 12 ausgerichtete Wandsegmente 141, 142 vorgesehen sind, die eine Längsöffnung 140A; 140B begrenzen. Die Kanalsegmente 1A, 1B liegen mit den mittleren Wandseiten 12, 12, die vorzugsweise durch Tox-Verbindungen miteinander verbunden eine Montagewand M bilden, Rücken an Rücken aneinander.

Die Montagewand M weist Durchlassöffnungen 111 auf, durch die hindurch ein elektrisches Kabel oder eine Gasleitung 93 vom ersten in das zweite Kanalsegment 1B, 1B überführt wird. Im zweiten Kanalsegment 1B können Leitungen 9, 91 vorteilhaft über grössere Distanzen zu einem Verbraucher geführt und dort durch eine der Durchlassöffnungen 111 in das erste Kanalsegment 1A überführt werden. Das erste Kanalsegment 1A dient vorteilhaft als Anschlusskanal, während das zweite Kanalsegment 1B als Kabelkanal oder Transferkanal dient. Die Kanalquerschnitte der beiden Kanalsegmente 1A, 1B werden nach Kapazitätsbedarf dimensioniert, wie dies in Fig. 1b gezeigt ist.

Die Montagewand M ist ferner mit einer Montageöffnung 112 versehen, in die eine Steckdose 8 eingesetzt ist, die im zweiten Kanalsegment 1B an ein Versorgungskabel 92 angeschlossen und im ersten Kanalteil 1A durch einen Steckverbinder (nicht gezeigt) mit einem Anschlusskabel 94 verbunden ist. Das Anschlusskabel 94 wird beispielsweise zu einem im Anwendungsraum fest installierten elektrischen Gerät geführt. Durch die Anordnung der Steckdose 8 innerhalb des Installationskanals 1 bleibt diese innerhalb des Kanalkörpers 10 optimal geschützt und tritt nach dem Aufsetzen der gezeigten Abdeckung 21 nicht störend in Erscheinung. Die Abdeckung 21 kann eine einheitliche Front bilden und beispielsweise nach Wunsch eingefärbt oder beschichtet werden, so dass ein vorteilhaftes Erscheinungsbild erzielt wird.

Falls der Anwender jedoch eine Steckdose 80 an der Aussenseite des Installationskanals 1 wünscht, kann diese in die Abdeckung 21 eingesetzt werden. Diese äussere Steckdose 80 kann beispielsweise durch ein mit Steckverbindern versehenes Verbindungskabel mit der inneren Steckdose 8 verbunden werden.

Besonders wichtig, insbesondere im Laborbereich, ist die Trennung von Medienleitungen, wie Leitungen für Wasser, Abwasser, Gase, etc., von elektrischen Leitungen. Oft ist es auch wünschbar, Kabel der Stromversorgung und Kabel der Nachrichtentechnik voneinander zu trennen. Dies gelingt mit der Montagewand M, die zusätzlich für die Aufnahme von Abschlussvorrichtungen für diese Medienleitungen vorbereitet werden kann.

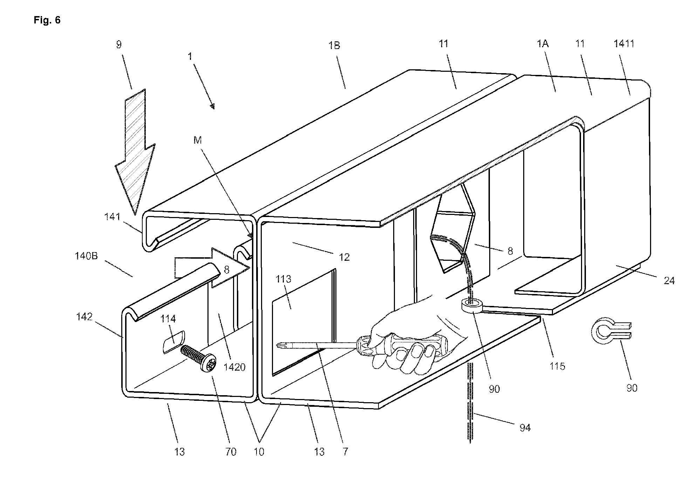

Ferner kann die Montagewand M mit Öffnungen oder Montagefenstern 113 versehen werden, die es erlauben, ein Werkzeug 7 durch die Montagewand hindurch zu führen, beispielsweise um eine für die Montage des Installationskanals 1 vorgesehene Montageschraube 70 festzuziehen (siehe Fig. 6).

Der Kanalkörper 10 ist daher zwischen den beiden Längsöffnungen 140A und 140B, soweit notwendig, durchlässig.

Sofern nur die beiden Längsöffnungen 140A und 140B vorgesehen sind und auf die gezeigten Öffnungen 119 verzichtet wird oder vorgesehene Öffnungen abgeschlossen werden kann der Installationskanal 1 trotz seiner vorteilhaften internen Durchlässigkeit anhand von zwei Abdeckungen 21A, 21B dicht abgeschlossen werden, wie dies Fig. 1b zeigt.

Für Kabel und Leitungen 9, die bei dieser Ausgestaltung aus dem Installationskanal 1 herausgeführt werden, wird an der Austrittsstelle vorzugsweise ein Kabeldurchlass vorgesehen, mittels dessen die Durchlassstelle vollständig abgedichtet werden kann, wie dies mit Bezug auf Fig. 6 beschrieben ist. Der Kabeldurchlass kann mit oder ohne Zugentlastungsvorrichtung realisiert werden.

Die multifunktionale Montagewand M dient daher als Ordnungstrennwand, als Montagewand für Geräte 8 und Kabel 9, als Durchlassvorrichtung für Kabel 9 und Werkzeuge 7 und vor allem als tragendes Element des Kanalkörpers 10.

Fig. 1b zeigt den mittels zwei ersten Abdeckungen 21A, 21B abgeschlossenen Installationskanal 1 von Fig. 1a in einer asymmetrischen Ausgestaltung. Um die Kapazität des zweiten Kanalsegments 1B zu erhöhen, wurden dessen Seitenwände 11, 13 verlängert. Die beiden zueinander parallelen Seitenwände 11, 13 des ersten Kanalsegments 1A wurden hingegen verkürzt, da für den dadurch gebildeten Anschlusskanal weniger Raum benötigt wird. Der Kanalkörper 10 kann unter Berücksichtigung der benötigten Kanalkapazitäten und der Abmessungen der elektrischen Geräte 8 vorteilhaft dimensioniert werden.

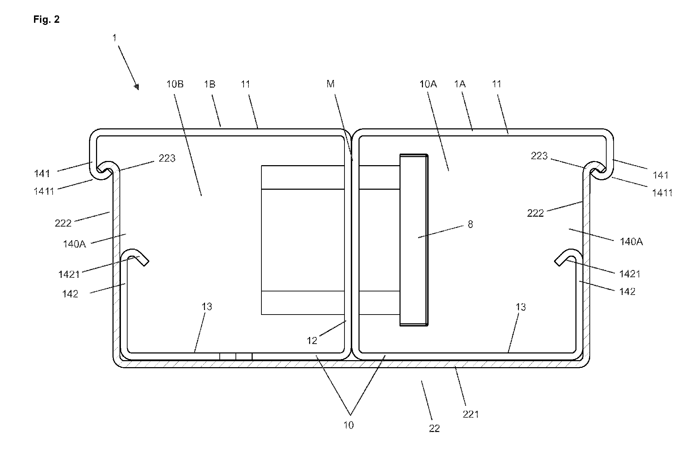

Fig. 2 zeigt den Installationskanal 1 von Fig. 1a in einer vorzugsweisen Ausgestaltung, in der nur eine U-Profil-förmige Abdeckung 22 mit einem Mittelstück 221 und zwei Schenkeln 222 vorgesehen ist, die sich über drei Seiten des Kanalkörpers 10 erstreckt und beide Längsöffnungen 140A, 140B verschliesst. Die Abdeckung 22 ist an den Schenkeln 222 mit Kopplungselementen 223 versehen, die mit endseitig an den Wandsegmenten 141 vorgesehenen Abschlusselementen 1411 verbunden sind. Die Wandelemente 11 der beiden Kanalsegmente 1A, 1B sind etwas verlängert, damit die Wandsegmente 141, 142 und die Schenkel 222 der Abdeckung 22 parallel zueinander ausgerichtet sein können.

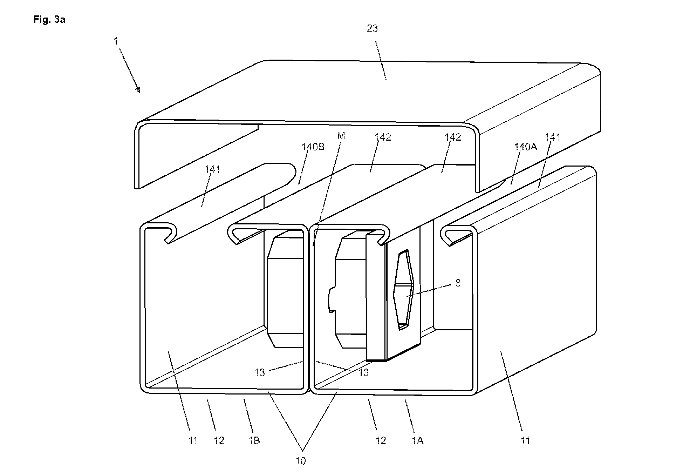

Fig. 3a zeigt den Installationskanal 1 von Fig. 1a in einer weiteren vorzugsweisen Ausgestaltung, in der die beiden Kanalsegmente 1A, 1B mit den Längsöffnungen 140A, 140B nach oben auf dieselbe Seite des Kanalkörpers 10 ausgerichtet sind. In diesem Fall bilden die beiden miteinander verbundenen Seitenwände 13 die Montagewand M. Diese Ausgestaltung kann vorteilhaft für die Installation von Kabel 9 und Geräten 8 unterhalb eines Doppelbodens verwendet werden. Der Installationskanal 1 kann vor und nach der Installation des Doppelbodens vorteilhaft von oben bedient werden.

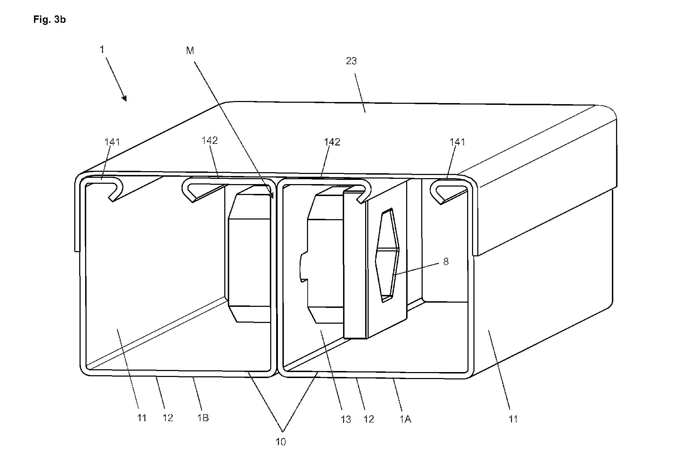

Fig. 3b zeigt den Installationskanal 1 von Fig. 3a mit einer Abdeckung 23, mittels der die beiden Längsöffnungen 140A, 140B verschlossen sind.

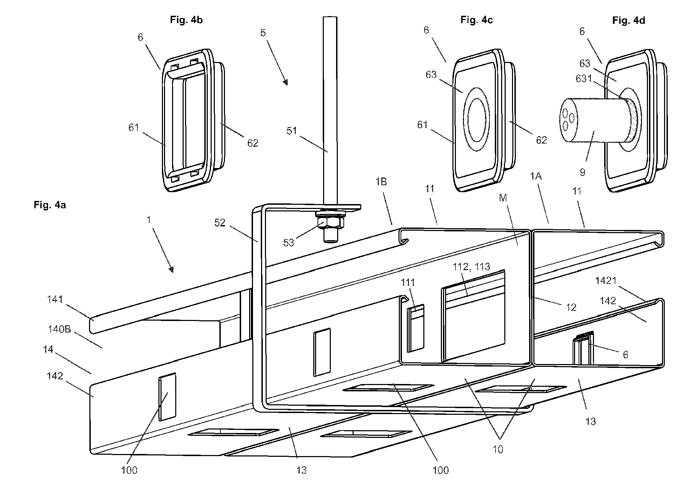

Fig. 4a zeigt den als Deckenkanal ausgebildeten Installationskanal 1 von Fig. 1a, der von einem Montagebügel 52 einer Aufhängevorrichtung 5 gehalten wird, der mittels einer Schraubenmutter 53 mit einem in der Decke gehaltenen Segmentanker 51 verbunden ist.

Die Montagewand M ist mit den bereits besprochenen Öffnungen 111, 112, 113 versehen. An der Aussenseite des Kanalkörpers 10 sind der Durchführung von Kabel und Leitungen 9 dienende Kanalöffnungen 100 vorgesehen, in die die in Fig. 4b, 4c und 4d gezeigten Einsatzelemente 6 einsetzbar sind, um den Installationskanal 1 vollständig abzudichten.

Fig. 4b zeigt ein der schonenden Auflage eines Kabels 9 dienendes Einsatzelement 6 mit einem Montagerahmen 61 und einem in eine Kanalöffnung 100 einführbaren und darin fixierbaren Montageflansch 62.

Fig. 4c zeigt das Einsatzelement 6 von Fig. 4b mit einer elastisch dehnbaren Abdeckfolie 63, die mit einem Kabel 9 durchstossen werden kann. Dazu ist die Abdeckfolie 63 vorzugsweise mit ringförmig verlaufenden Verdünnungen versehen, die leichter durchbrochen werden können.

Fig. 4d zeigt das Einsatzelement 6 von Fig. 4c mit einem Kabel 9, welches die Abdeckfolie 63 durchstossen hat, die in der Folge mit einem Kragen 631 am Kabel 9 anliegt und den Kabeldurchgang dicht abschliesst.

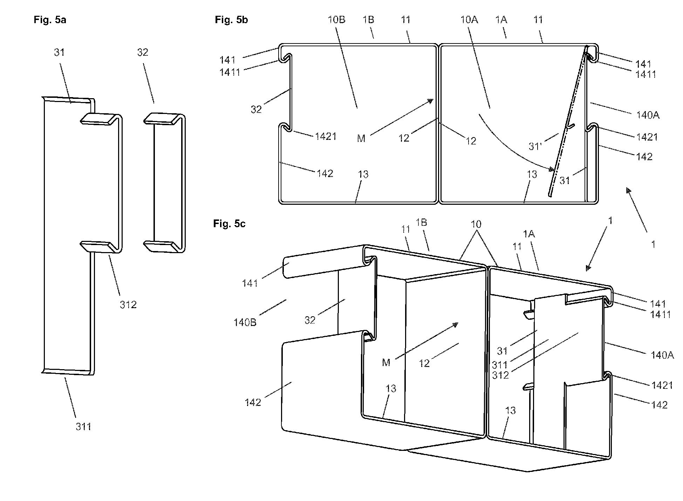

Fig. 5a zeigt ein erstes Halteelement 31, welches einstückig aus einem Blech ausgeschnitten und geformt wurde. Das Halteelement 31 umfasst ein Distanzteil 311 und eine Klammerteil 312. Ferner ist ein zweites Halteelement 32 gezeigt, welches als Klammer ausgebildet ist.

Fig. 5b und Fig. 5c zeigen den Installationskanal 1 von Fig. 1a, in den die beiden Halteelemente 31, 32 eingesetzt sind, um diesen zu stabilisieren.

Das Klammerteil 312 des ersten Halteelements 31 umklammert und verbindet die Abschlusselemente 1411, 1421 der Wandsegmente 141, 142 des ersten Kanalsegments 1A. Die an die Wandsegmente 141, 142 anschliessenden Seitenwände 11, 13 des ersten Kanalsegments 1A werden dadurch zusammengehalten und können nicht auseinander driften. Das Distanzteil 311 steht hingegen bündig zwischen den parallel ausgerichteten Seitenwänden 11, 13 und hält diese auf Distanz. Fig. 5b zeigt, dass das erste Halteelement 31' montiert wird, indem es am Abschlusselement 1411 des oberen Wandsegments 141 eingehängt und gegen das untere Wandsegment 142 gedreht wird.

Das zweite Halteelement 32 umklammert und verbindet die Abschlusselemente 1411, 1421 der Wandsegmente 141, 142 des zweiten Kanalsegments 1B. Die an die Wandsegmente 141, 142 anschliessenden Seitenwände 11, 13 des zweiten Kanalsegments 1B werden dadurch zusammengehalten und können nicht auseinander gebogen werden.

Nach der Montage des Installationskanals 1, der Kabel und Leitungen 9 sowie der Vorrichtungen und Geräte 8 und vor dem Aufsetzen der Abdeckung oder Abdeckungen 2, kann der Kanalkörper 10 anhand der Halteelemente 31 und/oder 32 in einfacher Weise stabilisiert werden. Der Installationskanal 1 ist in der Folge auch unter Einwirkung höherer Belastungen formstabil.

Fig. 6 zeigt den Installationskanal 1 von Fig. 1a in einer insbesondere für den Anschlussbereich vorgesehenen Ausgestaltung. Die Montagewand M weist eine grössere Öffnung 113 auf, durch die ein Werkzeug 7 hindurchgeführt werden kann, um im zweiten Kanalsegment 1B eine Montageschraube 70 festzuziehen, die durch eine Öffnung 114 im Wandsegment 142 nach aussen geführt wird. Durch die Öffnung 113 können auch Kabel 9 aus dem zweiten Kanalsegment 1B in das erste Kanalsegment 1A überführt werden.

Das zweite Kanalsegment 1B weist ein G-Profil mit einer verkürzten oberen Seitenwand 11 auf. Die Längsöffnung 140B verläuft daher geneigt und weist eine waagrecht verlaufende Querschnittskomponente auf, durch die hindurch Kabel und Leitungen 9 in das zweite Kanalsegment 1B eingelegt werden können. Der Installationskanal 1 kann somit auch nach dessen Montage an einer Wand oder einem Fensterrahmen von oben bedient werden.

In der unteren Seitenwand 13 des ersten Kanalsegments 1A ist wenigstens ein senkrecht zur Längsachse des Installationskanals 1 nach aussen verlaufender Längsschnitt 115 vorgesehen, welcher der Aufnahme eines Kabels oder einer Leitung 94 dient. Das Kabel 94 ist innerhalb des Längsschnitts 115 von einem ringförmigen Dichtungselement 90 gehalten, welches die Durchlassöffnung 115 abdichtet und als Zugsentlastung dient. Das separat gezeigte Dichtungselement 90 ist vorzugsweise als Klammer ausgebildet, die einen Kabelring mit zwei daran anschliessenden Hebeln aufweist, die zusammengedrückt in den Längsschnitt 115 eingeführt werden können. Auf diese Weise wird das Kabel 90 festgeklemmt und der Längsschnitt 115 abgedichtet.

Das Wandsegment 142 des zweiten Kanalsegments 1B ist ferner mit wenigstens einem Ausschnitt 1420, vorzugsweise mit mehreren in Reihe angeordneten Ausschnitten 1420 versehen, durch die hindurch Geräte 8 gegen die Montagewand M geführt und montiert werden können. Die Ausschnitte 1420 werden vorzugsweise zusammen mit der Längsöffnung 140B von einer Abdeckung abgedeckt.

Bei dieser Ausgestaltung ist das erste Kanalsegment 1A U-Profil-förmig oder C-Profil-förmig ausgebildet und zur Aufnahme einer U-Profil-förmigen Abdeckung 24 vorgesehen, die in das erste Kanalsegment 1A eingeschoben wird und wenigstens vom Abschlusselement 1411 der oberen Seitenwand 11 gehalten wird, das gerundet nach unten verläuft. Durch die Integration der Abdeckung 24 werden aussen liegende Metallplatten und Kanten vermieden, die störend in Erscheinung treten und Staubfänger bilden können.

Nach der Montage und Inbetriebnahme des Installationskanals ist daher nur eine glatte äussere Kanaloberfläche sichtbar, die beliebig ausgestaltet und beschichtet werden kann. Kabel, Anschlussvorrichtungen und weitere Geräte, beispielsweise Netzwerkgeräte, die zur drahtlosen oder drahtgebunden Kommunikation vorgesehen sind, bleiben unsichtbar. Allenfalls verwendete Antennen können durch eine Öffnung isoliert nach aussen geführt.

Der erfindungsgemässe Installationskanal 1 weist daher zahlreiche Funktionen und vorteilhafte Eigenschaften auf und kann zusätzlich als Designelement in einem Labor, in einer Ausstellung, einem Geschäftsraum oder sogar in einem Wohnraum eingesetzt werden.

## Patentansprüche

1. Installationskanal (1) zur Aufnahme von Leitungen und Kabeln (9) sowie Geräten (8) umfassend einen Kanalkörper (10), der wenigstens eine parallel zur Längsachse des Installationskanals (1) verlaufende Längsöffnung aufweist, **dadurch gekennzeichnet, dass** der Kanalkörper (10) ein erstes und ein zweites Kanalsegment (1A; 1B) umfasst, die je eine am Kanalkörper (10) aussen liegende und parallel zur Längsachse des Installationskanals (1) verlaufende Längsöffnung (140A; 140B) aufweisen und die je eine innerhalb des Kanalkörpers (10) angeordnete Seitenwand (11; 12; 13) aufweisen, die miteinander verbunden eine Montagewand (M) bilden, die mit Öffnungen (111, 112) versehen ist, die zur Montage der elektrischen Geräte (8) und zur Durchführung der Kabel (9) vorgesehen sind.

2. Installationskanal (1) nach Anspruch 1, **dadurch gekennzeichnet, dass** die Montagewand (M) mit daran befestigten oder darin eingearbeiteten Montageelementen, wie Montageschienen, Montagehaken, Montagerillen, Montagekanten, Montagesenken, Zugsentlastungen oder Schraubengewinden versehen ist.

3. Installationskanal (1) nach Anspruch 1 oder 2, **dadurch gekennzeichnet, dass** die innerhalb des Kanalkörpers (10) aneinander liegenden Seitenwände (11; 12; 13), die die Montagewand (M) bilden, durch Tox-Verbindungen miteinander verbunden sind.

4. Installationskanal (1) nach Anspruch 1, 2 oder 3, **dadurch gekennzeichnet, dass** die beiden Kanalsegmente (1A, 1B) identisch ausgestaltet sind und vorzugsweise je einen rechteckigen Querschnitt aufweisen, oder dass die beiden Kanalsegmente (1A, 1B) unterschiedliche rechteckige Querschnitte aufweisen und derart aneinander liegen, dass der resultierende Kanalkörper (10) einen zumindest annähernd rechteckförmigen Querschnitt aufweist.

5. Installationskanal (1) nach einem der Ansprüche 1-4, **dadurch gekennzeichnet, dass** die beiden Kanalsegmente (1A, 1B) ein C-Profil, ein G-Profil oder ein U-Profil aufweisen und/oder dass die beiden Kanalsegmente (1A, 1B) spiegelsymmetrisch zueinander ausgerichtet sind.

6. Installationskanal (1) nach einem der Ansprüche 1-5, **dadurch gekennzeichnet, dass** die beiden Kanalsegmente (1A, 1B) je eine mittlere Seitenwand (12) aufweisen, an die auf gegenüberliegenden Seiten je eine äussere Seitenwand (11; 13) anschliesst, die auf den der mittleren Seitenwand (12) gegenüberliegenden Seiten gegebenenfalls je über ein geneigt dazu verlaufendes Wandsegment (141; 142) und/oder ein Abschlusselement (1411; 1421) die zugehörige Längsöffnung (140A; 140B) begrenzen.

7. Installationskanal (1) nach Anspruch 6, **dadurch gekennzeichnet, dass** die äusseren Seitenwände (11, 13) auf den der mittleren Seitenwand (12) gegenüberliegenden Seiten, gegebenenfalls die daran vorgesehenen Wandsegmente (141, 142) und/oder ein Abschlusselement (1411; 1421),
a) durch wenigstens ein dazwischen liegendes Halteelement (31; 32) umklammert und/oder auf Distanz gehalten sind und/oder
b) wenigstens einen Ausschnitt (1420) aufweisen, durch den hindurch ein Gerät (8) in den Installationskanal (1) einführbar ist.

8. Installationskanal (1) nach einem der Ansprüche 1-7, **dadurch gekennzeichnet, dass** die beiden Längsöffnungen (140A; 140B) an derselben Seite des Kanalkörpers (10), an einander gegenüberliegenden Seiten des Kanalkörpers (10) oder an aneinander anstossenden Seiten des Kanalkörpers (10) vorgesehen sind oder dass wenigstens eine der Längsöffnungen (140A; 140B) im Übergangsbereich zwischen zwei Seiten des Kanalkörpers (10) vorgesehen ist.

9. Installationskanal (1) nach einem der Ansprüche 1-8, **dadurch gekennzeichnet, dass** die beiden Längsöffnungen (140A, 140B) durch eine gemeinsame Abdeckung (22; 23) abgedeckt sind, die eine, zwei oder drei Seiten des Kanalkörpers (10) zumindest teilweise überdeckt oder dass wenigstens eine der Längsöffnungen (140A, 140B) durch eine separate Abdeckung (21A, 21B) abgedeckt ist, die den Kanalkörper (10) teilweise umfasst oder innerhalb der betreffenden Längsöffnung (140A; 140B) gehalten ist.

10. Installationskanal (1) nach einem der Ansprüche 5 - 9, **dadurch gekennzeichnet, dass** die Abdeckung (22), vorzugsweise wenigstens ein daran vorgesehenes Kopplungselement (223), mit einem am zugewandten Kanalsegment (1A, 1B) vorgesehenen Abschlusselement (1411; 1421) verbunden oder verbindbar ist.

11. Installationskanal (1) nach einem der Ansprüche 1 - 10, **dadurch gekennzeichnet, dass** das erste und/oder das zweite Kanalsegment (1A; 1B) mit der Durchführung von Kabeln (9) dienenden Durchlassöffnungen (100) versehen sind.

12. Installationskanal (1) nach Anspruch 11, **dadurch gekennzeichnet, dass** in wenigstens eine der Durchlassöffnungen (100) ein aus Kunststoff gefertigtes Einsatzelement (6) eingesetzt ist, welches einen mit einem Montageflansch (62) versehenen Montagerahmen (61) aufweist.

13. Installationskanal (1) nach Anspruch 12, **dadurch gekennzeichnet, dass** der Montagerahmen (61) mit einer stabilen Abdeckplatte oder mit einer elastisch dehnbaren Abdeckfolie (63) versehen ist, die an einer Stelle von einem Kabel (9) durchstossbar ist und dieses in der rohrförmig umschliesst.

14. Installationskanal (1) nach einem der Ansprüche 1 - 13, **dadurch gekennzeichnet, dass** die beiden Kanalsegmente (1A, 1B) aus Metallblech ausgeschnitten und geformt sind.

15. Installationskanal (1) nach einem der Ansprüche 1 - 14 mit installierten Kabeln (9) und mit installierten elektrischen Geräten (8), **dadurch gekennzeichnet, dass** die Kabel (9) durch erste Öffnungen (111) in der Montagewand hindurch geführt sind, dass Geräte (8), insbesondere Anschlussvorrichtungen, in zweite Öffnungen (112) in der Montagewand eingesetzt sind und/oder dass die ersten, zweiten oder dritte Öffnungen (113) in der Montagewand (M) zur Durchführung eines Montagewerkzeugs vorgesehen sind.
